# EUROPÄISCHE PATENTANMELDUNG

(11) **EP 2 894 268 A1**
(43) Veröffentlichungstag der Anmeldung: **15.07.2015**
(21) Anmeldenummer: 14195010.5
(22) Anmeldetag: 26.11.2014
(51) Int. Cl.: E04B 1/76, E04B 1/80, C08G 18/73, C09J 175/04, E04C 2/288, C04B 24/28, B32B 5/22, C04B 26/16

(54) **Wärmedämmplatte für das Bauwesen und Verfahren zum Herstellen einer Wärmedämplatte für das Bauwesen**

(30) Priorität: 08.01.2014 DE 102014200156
(71) Anmelder: Isola Belgium NV, 3700 Tongeren (BE)
(72) Erfinder: Blocken, Wilfried, 3780 Kortessem (BE); Mullens, Herman, 3550 Heusden Zolder (BE); Bostyn, Maarten, 3700 Tongeren (BE)
(74) Vertreter: Patentanwälte Bauer Vorberg Kayser

(57) **Zusammenfassung**

Die Wärmedämmplatte für das Bauwesen ist zweischichtig aus einer Schaumstoffplatte (20), die einen geschlossenzelligen Schaum aufweist, und einer Lage (22) aufgebaut. Die Lage (22) besteht aus Körnern (24) und einem Kunststoffkleber. Die Körner bestehen aus Stein oder aus Glas. Der Kunststoffkleber verbindet einerseits die Körner (24) untereinander und andererseits die Körner (24) mit einer Oberfläche (28) der Schaumstoffplatte (20). Die Lage (22) weist untereinander verbundene, offene Poren auf. Das Porenvolumen beträgt mindestens 20 Vol-%, insbesondere mindestens 30 Vol-%. Bei dem Verfahren werden die Körner (24) mit einem zweikomponentigen Polyurethankleber vermischt, bis eine homogene Masse (34) erreicht ist. Diese wird frisch auf eine Oberfläche (28) der Schaumstoffplatte (20) aufgebracht, anschließend egalisiert und gegen die Schaumstoffplatte (20) angedrückt.

## Beschreibung

Die Erfindung bezieht sich auf eine zweischichtige Wärmedämmplatte für das Bauwesen, sie hat als eine Schicht eine Schaumstoffplatte, die einen geschlossenzelligen Schaum aufweist, und als zweite Schicht eine auf die Schaumstoffplatte aufgebrachte Lage. Die Erfindung bezieht sich weiterhin auf ein Verfahren zum Herstellen einer derartigen Wärmedämmplatte.

Eine Wärmedämmplatte der eingangs genannten Art ist aus der DE 100 07 775 A1 bekannt. Diese Wärmedämmplatte hat eine Schaumstoffplatte aus Polystyrol und eine darauf aufgebrachte Lage bestehend aus einem Putz.

Derartige Wärmedämmplatten werden insbesondere für die Außenfläche von Fassaden verwendet. Sie können nachträglich angebracht werden, sie können aber auch schon bei der Erstellung eines Bauwerkes angebracht werden. Die Wärmedämmplatte dient insbesondere der Wärmedämmung, sie hat aber auch eine Dämmfunktion im akustischen Bereich. Aufgrund des geschlossenzelligen Schaums ist die Schaumstoffplatte wasserundurchlässig.

Derartige Wärmedämmplatten können an ihrer rückwärtigen Oberfläche und an ihren vier Seitenflächen mit einem Bauwerk verbunden werden. Sie können insbesondere mittels Befestigungshaken mit einem Bauwerk verbunden werden, hierzu wird auf DE 10 2010 015 228 A1 und DE 10 2010 043 998 A1 verwiesen, aus denen Befestigungshaken ersichtlich sind. Dabei macht man sich den Umstand zunutze, dass angespitzte Stifte oder flache Platten in eine Seitenfläche der Schaumstoffplatte eingedrückt werden können und dort halten. Auf diese Weise kann eine Wärmedämmplatte an einem Gebäude rasch und weitgehend unabhängig von der Witterung oder Temperatur befestigt werden. Durch die Stifte oder Platten wird eine sofortige Fixierung erreicht. Es ist auch möglich, die Wärmedämmplatte anzukleben, z.B. mit einem mineralischen Kleber anzukleben oder dergleichen.

Hier setzt nun die Erfindung ein. Sie hat es sich zur Aufgabe gemacht, die Wärmedämmplatte der eingangs genannten Art weiterzubilden und zugleich ein Verfahren zur Herstellung einer Wärmedämmplatte anzugeben. Die Wärmedämmplatte soll eine resistente Lage aufweisen, die auch gegen größere mechanische Angriffe geschützt ist. Die Lage soll eine hohe Wasserdurchlässigkeit aufweisen, so dass sie kein Wasser speichert und möglichst wenig verschmutzt. Die Wärmedämmplatte soll sich einfach fertigen lassen. Sie soll einfach montierbar sein, insbesondere mittels der erwähnten Stifte oder Platten.

Diese Aufgabe wird gelöst durch eine Wärmedämmplatte für das Bauwesen mit einer Schaumstoffplatte, die einen Schaum mit geschlossenen Zellen aufweist, und mit einer auf die Schaumstoffplatte aufgebrachten und mit ihr verbundenen Lage, die aus Körnern und einem Kunststoffkleber besteht, wobei die Körner aus Stein oder aus Glas bestehen und der Kunststoffkleber einerseits die Körner untereinander und andererseits die Körner mit einer Oberfläche der Schaumstoffplatte verbindet, wobei die Lage ein Porenvolumen aufweist, das mindestens 20 Vol-%, insbesondere mindestens 30 Vol-% beträgt, sie wird weiterhin gelöst durch ein Verfahren zum Herstellen einer Wärmedämmplatte für das Bauwesen, die eine Schaumstoffplatte, welche einen geschlossenzelligen Schaum aufweist und eine Lage aus Körnern und Kunststoffkleber aufweist, gekennzeichnet durch die folgende Verfahrensschritte:
a) Bereitstellen der Schaumstoffplatte,
b) Mischen der Körner mit einem zweikomponentigen Polyurethankleber, bis eine homogene Masse erreicht ist,
c) Aufbringen der Masse auf eine Oberfläche der Schaumstoffplatte, anschließend an das Mischen und bevor der Aushärteprozess abgeschlossen ist, und
d) Egalisieren der Masse auf der Schaumstoffplatte, Andrücken der Masse gegen die Schaumstoffplatte und Ausbilden einer Lage mit einer gleichmäßigen Schichtdicke auf der Oberfläche der Schaumstoffplatte, und
e) Aushärtenlassen des Polyurethanklebers.

Bei dieser Wärmedämmplatte sorgt der Kunststoffkleber sowohl für die Verbindung der Körner untereinander als auch für die Verbindung der Körner mit der Oberfläche der Schaumstoffplatte. Vorzugsweise ist die Schaumstoffplatte aus Polyurethan (PUR) gefertigt. Vorzugsweise ist auch der Kunststoffkleber ein PUR-Kleber, insbesondere ein zweikomponentiger PUR-Kleber.

Die Wärmedämmplatte lässt sich kontinuierlich fertigen, sie kann auch chargenweise gefertigt werden. Der Vorteil liegt darin, dass der Kunststoffkleber sowohl die Körner miteinander verbindet als auch die Körner mit der Oberfläche der Schaumstoffplatte verbindet. Dabei wird ein ausreichend großes Porenvolumen erreicht, es liegt mindestens bei 20 Vol-%. Porenvolumina von mindestens 30, 40, 50 oder 60 Vol-% sind angestrebt und vorteilhaft. Das Porenvolumen ist auf das Gesamtvolumen der Lage bezogen.

Die Poren sind miteinander verbunden. Die Verbindungen zwischen benachbarten Poren haben einen freien Querschnitt von mindestens 0,1 mm2, vorteilhafterweise mindestens 0,5 mm2 und insbesondere mindestens 1 mm2. Die Poren sind auch an der Oberfläche der Lage sichtbar.

Aufgrund des hohen Porenvolumens und der offenporigen Ausbildung bleibt in der Lage kein Wasser zurück. In die Lage eingedrungenes Wasser fließt rasch ab. Dadurch bleibt praktisch kein Schmutz zurück. Die Lage hält ihre äußere Ansicht auch nach mehreren Jahren. In die Schaumstoffplatte selbst dringt kein Wasser ein.

Die Lage ist so porös und so dick, dass sie, wenn sie gegen das Licht gehalten wird, keine Lichtstrahlen durchlässt. Dies gilt für jede beliebige Orientierung der Lage zum Licht. Damit verdeckt die Lage die Schaumstoffplatte optisch.

Die Schaumstoffplatte hat eine Dicke, die der gewünschten Wärmeisolierung angepasst ist. Die Dicke beträgt mindestens 2 cm. Die obere Grenze für die Dicke ist beliebig, so werden Dicken von mindestens 16 cm, mindestens 32 cm vorgesehen. Vorzugsweise wird die Schaumstoffplatte aus einem Blockschaum herausgeschnitten. Auf diese Weise können unterschiedliche Dicken der Schaumstoffplatten erhalten werden.

Es ist vorteilhaft, die Schaumstoffplatte mit einem Haftprimer, insbesondere auf der Basis eines zweikomponentigen Polyurethans, dünn zu überziehen, bevor die Lage aufgebracht wird. Die dünne Beschichtung aus Haftprimer wird selbst nicht als eigene Schicht angesehen, so dass auch in diesem Fall die Wärmedämmplatte zweischichtig ist. Die Beschichtung hat eine Dicke unter 1 mm, insbesondere unter 0,5 mm.

Die Körner sind aus Stein oder Glas oder einem Gemisch hiervon, insbesondere bestehen sie aus Marmor oder Basalt, soweit Stein betroffen ist. Körner können gebrochene Körner oder auch fertig erstellte Körner, beispielsweise Glaskugeln sein. Vorzugsweise liegt das Körnungsband der Körner im Bereich von 1 bis 7 mm, insbesondere im Bereich von 2 bis 5, 1 bis 3, 3 bis 5 oder 2 bis 4 mm. Die Form der Körner selbst ist beliebig, die größte Abmessung der Körner sollte unter 10, insbesondere unter 7 mm liegen. Das Verhältnis zwischen der größten Abmessung eines Korns und seiner kleinsten Abmessung sollte nicht über 10, insbesondere nicht über 6, vorzugsweise nicht über 4 liegen.

Als Polyurethane werden Polyisocyanate bezeichnet. Sie enthalten zwei oder mehrere Isocyanatgruppen (-N=C=O). Grundlage der Polyurethan-Chemie sind die Polyadditions-Reaktionen von Polyisocyanaten mit zweiwertigen Alkoholen beziehungsweise mehrwertigen Alkoholen.

Insbesondere für den Kleber werden vorzugsweise Polyisocyanate mit mehr als zwei Isocyanatgruppen eingesetzt. Als Kleber wird vorzugsweise eine Polyurethandispersion verwendet. Sie ist ein fließfähiges Zweiphasensystem aus Wasser und einem Polymer, d.h. einem dispergierten Kunststoff, der zu der Klasse der Polyurethane gehört und gegebenenfalls weiteren Komponenten. Polyurethandispersionen sind eine umweltfreundliche Alternative zu lösemittelhaltigen Bindemitteln. Der Kleber ist ein zellfreies Polyurethan. Der Kleber ist vorzugsweise ein aliphatisches Polyurethan, vorzugsweise ein Hexamethylendiisocyanat, IPDI - Isophorondiisocyanat, CHDI - 1,4-Cyclo-hexyldiisocyanat.

Geeignet als Kleber sind z.B. Produkte aus der Desmodur N Reihe von Bayer, z.B. Desmodur N 3200 (eingetragene Marke).

Der Vorteil der Wärmedämmplatte liegt darin, dass sowohl für die Schaumstoffplatte als auch für den Kunststoffkleber vorzugsweise ein Polyurethan verwendet wird. Aufgrund der einheitlichen Zusammensetzung wird eine hohe Festigkeit und Dauerhaftigkeit erreicht. Das Material der Schaumstoffplatte verrottet vorzugsweise nicht, es ist langzeitbeständig. Die Schaumstoffplatte ist aus Hartschaum.

Die Wärmedämmplatten können in einer Fabrik hergestellt werden, sie können daher mit guter Genauigkeit und Reproduzierbarkeit gefertigt werden. Sie sind daher maßgenau. Auf der Baustelle lassen sich die Wärmedämmplatten zuschneiden, sofern dies für die konkrete Geometrie eines Bauwerks notwendig ist.

Während der Verlegung ist man von Witterungsbedingungen unabhängig. Die Wärmedämmplatten lassen sich bei jeder Temperatur und sogar bei Regen, Schnee und Frost verlegen. Dies gilt insbesondere für ein Befestigen der Wärmedämmplatten mittels der o.g. Stifte oder Platten.

Bei unebenen Untergründen kann man mit Abstandselementen oder mit mineralischen Baustoffen, beispielsweise Zementpasten, arbeiten. Dann wird auf die Rückseite der Wärmedämmplatte der pastöse, mineralische Kleber aufgebracht und die Wärmedämmplatte entsprechend angedrückt, wie dies bei der Verlegung von Fliesen auf unebenen Untergründen bekannt ist.

Ein Vorteil der Wärmedämmplatten liegt auch in ihrem ästhetischen Erscheinungsbild. Aufgrund der von den Körnern gebildeten Oberfläche ergibt sich eine schöne Struktur.

Bei der Herstellung werden die Körner mit einem PUR-Kleber vermischt. Verwendet wird ein zweikomponentiger PUR-Kleber. Es werden z.B. eingesetzt Er hat vorzugsweise einen höheren Gewichtsanteil an Klebmittel als an Härtemittel. Die Körner und der Kunststoffkleber werden vermischt, bis eine homogene Paste erreicht ist. Dabei sind die Körner vorzugsweise vollständig mit einer Schicht des Klebers umhüllt. Diese homogene Paste wird nun möglichst unmittelbar nach dem Vermischen auf eine Oberfläche der Schaumstoffplatte aufgebracht. Dort wird sie einerseits gleichmäßig ausgebreitet, dies kann beispielsweise mittels eines Rüttlers oder einer Abziehleiste, wie sie bei der Herstellung von Estrichen bekannt ist, erfolgen. Anschließend kann die erhaltene Schicht mittels einer Platte gegen die Oberfläche der Schaumstoffplatte gedrückt werden. Auf diese Weise bewirkt der Kunststoffkleber nicht nur die Verbindung der Körner untereinander, sondern auch die Verbindung der Körner mit der Oberfläche der Schaumstoffplatte. Er bewirkt vorzugsweise auch die Umhüllung der Körner. Angestrebt werden Dicken der Lage im Bereich von 2 bis 10 mm, insbesondere im Bereich von 3 bis 5 mm.

Vorzugsweise werden Wärmedämmplatten hergestellt, die eine einheitliche Größe haben, beispielsweise 60 x 60 cm. Hierzu ist es vorteilhaft, die Platten industriell zu schneiden, so dass saubere Kanten und Ecken erreicht sind.

Der Schaumstoff hat vorzugsweise ein Raumgewicht zwischen 30 und 50 kg/m³ Bevorzugt ist ein Raumgewicht von etwa 40 kg/m³.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigen:
- Fig. 1:: eine Seitenansicht, teilweise als Schnitt, einer Wärmedämmplatte mit Blick auf einen Teil einer Seitenfläche,
- Fig. 2:: das Detail II in Fig. 1 in einer Vergrößerung,
- Fig. 3: eine schematische Darstellung einer Anlage für die Herstellung einer Wärmedämmplatte und
- Fig. 4: eine schematische Darstellung einer weiteren Anlage für die Herstellung einer Wärmedämmplatte.

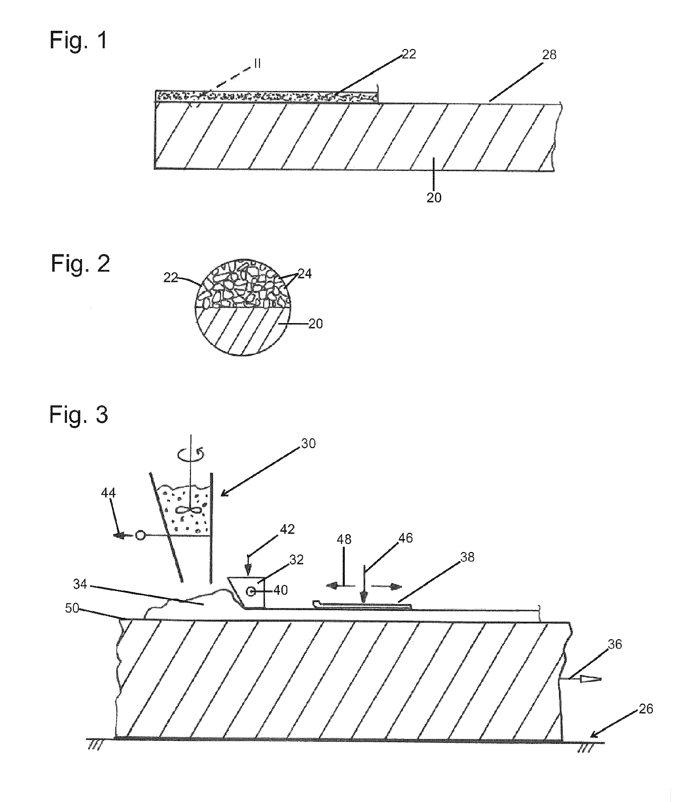

Figur 1 zeigt teilweise eine Seitenansicht einer Wärmedämmplatte. Ein Querschnitt würde zu einer entsprechenden Ansicht führen. Die Wärmedämmplatte ist zweischichtig. Sie hat eine Schaumstoffplatte 20 aus geschlossenzelligem PUR-Schaum mit einem Raumgewicht von etwa 40 kg/m³. Sie hat weiterhin eine Lage 22, die aus Körnern und einem PUR-Kleber besteht. Es wird zweikomponentiger PUR-Kleber verwendet. Dabei wird ein Kunststoffkleber bestehend aus 60 Gew.-% PUR und 40-Gew.-% Härtemittel eingesetzt. Die Körner sind Marmorkörner mit einem Körnungsband von 3 bis 5 mm. In der ausgehärteten Lage 22 liegt ein Porenvolumen von 30 Vol.-% vor. Die Poren sind miteinander in Verbindung.

Aus Figur 2 ist ersichtlich, dass die Poren auch von außen zu erkennen sind. Sie befinden sich zwischen benachbarten Körnern 24. Das relativ große Porenvolumen ist erkennbar. Wie Fig. 2 zeigt, sind die einige Körner 24 geringfügig in die Schaumstoffplatte 20 eingedrückt. Sie sind vorzugsweise mindestens 0,2 bis 1 mm eingedrückt.

Figur 3 zeigt schematisch die Schritte zur Herstellung einer derartigen Wärmedämmplatte.

Zunächst wird eine Schaumstoffplatte 20 zur Verfügung gestellt, sie wird beispielsweise aus Blockschaum herausgeschnitten. Im konkreten Fall hat sie die Standardabmessung 0,61 x 1,22 m und eine Dicke von 16 cm. Die Schaumstoffplatte 20 wird auf eine ebene Unterlage 26, beispielsweise einen Tisch, aufgelegt. Sie liegt in der Waagerechten. Eine obere Oberfläche 28 ist von oben frei zugänglich. Mit ihrer Rückseite liegt sie auf der Unterlage 26 auf.

Die obere Oberfläche 28 kann eine Beschichtung 50 auf der Basis eines Zweikomponenten-Polyurethans aufweisen. Diese Beschichtung 50 ist zuvor auf die Oberfläche 28 aufgebracht worden. Sie hat eine Dicke unter 1 mm, vorzugsweise unter 0,5 insbesondere unter 0,3 mm.

Oberhalb der Oberfläche 28 befindet sich ein Mischer 30. Er ist in einem Abstand von der Oberfläche angeordnet, der etwa 1,1 bis 1,5-mal so groß ist wie die finale Dicke der Lage 22. Er hat einen Trichter, der sich über die Breite der Oberfläche 28 erstreckt. Im Mischer 30 werden die Körner 24 und der Kunststoffkleber so miteinander vermischt, dass eine homogene, klebrige Masse 34 erreicht wird. Diese Masse 34 wird kontinuierlich oder nacheinander auf die Oberfläche 28 aufgebracht. Im konkreten Ausführungsbeispiel ist ein Schieber vorgesehen, der nach Erstellen einer Charge geöffnet wird, siehe Pfeil 44, so dass die Masse 34 auf die Oberfläche 28 fallen kann.

Oberhalb der Oberfläche 28 und in Richtung eines Pfeils 36 seitlich gegenüber dem Mischer 30 versetzt befindet sich ein Balken 32, auch Abziehleiste genannt. Der Balken32 wird quer zur Zeichnungsebene hin und her bewegt, siehe Pfeil 40. Zudem kann er angedrückt werden, siehe Pfeil 42. Wie beim Verlegen von Estrich bewirkt er ein Egalisieren und ein Andrücken der Masse 34 gegen die Oberfläche 28.

Nach Passage des Balkens 32 wird die schon relativ gleichmäßige Schicht durch eine Platte 38 angedrückt und weiter kompaktiert und geglättet. Dabei wird auch eine gute Haftung mit der Oberfläche 28 erreicht bzw. verbessert. Der Druck nach unten ist durch den Pfeil 46 angezeigt. Die Bewegung parallel zum Pfeil 36 wird durch die Pfeile 48 angedeutet. Die Platte 38 ist vorzugsweise aus Edelstahl oder einem anderen, möglichst wenig mit dem Kleber reagierenden Material, z.B. ist sie mit PTFE beschichtet. Sie wird von Zeit zu Zeit gereinigt.

Bei der Produktion wird die Schaumstoffplatte 20 im Sinne des Pfeils 36 nach rechts bewegt. Alternativ kann auch die Unterlage 26 gemeinsam mit der Schaumstoffplatte 20 bewegt werden oder es kann die oberhalb der Schaumstoffplatte 20 befindliche Anordnung aus Mischer 30, Balken 32 und Platte 38 nach links bewegt werden.

Hinter der Platte 38 liegt die fertiggestellte Schicht vor, die lediglich noch aushärten muss. Ist das Aushärten des Klebers erfolgt, ist die Lage 22 fertiggestellt, sie ist nun fest mit der Schaumstoffplatte 20 verbunden. Die Wärmedämmplatte wird in einem nachfolgenden Schritt, der hier nicht dargestellt ist, geschnitten.

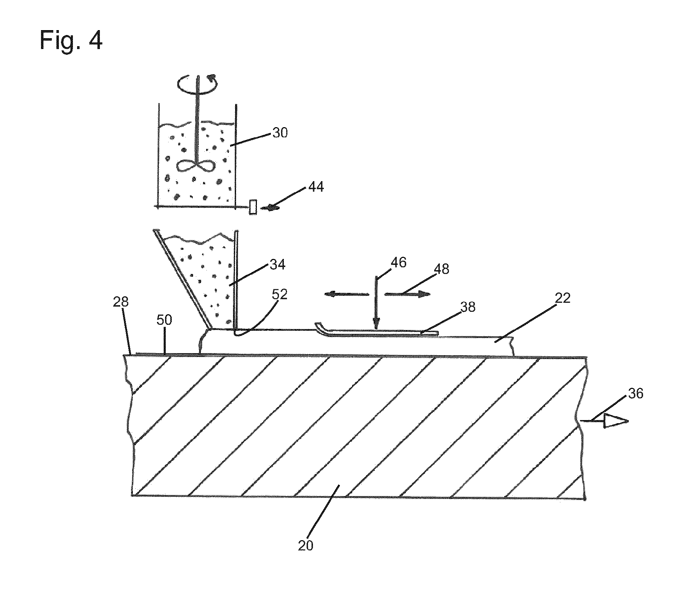

Im Folgenden wird das Verfahren nach Figur 4 erläutert, insbesondere aber nur insoweit, wie es sich von dem Herstellungsverfahren nach Figur 3 unterscheidet.

Der Mischer 30 ist nun nicht mehr mit dem darunter befindlichen Trichter verbunden, sondern oberhalb des Trichters angeordnet und von ihm beabstandet. Im Mischer 30 wird der Mischvorgang durchgeführt. Ist er abgeschlossen, wird der Schieber geöffnet und wird die Masse 34 in den Trichter gegeben. Der Trichter erstreckt sich über die gesamte Breite der Schaumstoffplatte 20. Er ist ständig mit Masse 34 gefüllt. Der Trichter hat eine hintere Kante 52, die im Abstand von und parallel zur Oberfläche 28 verläuft. Auch sie erstreckt sich über die gesamte Breite der Schaumstoffplatte 20. Aus dem Trichter fällt ständig Masse 34 nach unten. Durch die hintere Kante 32 wird die Höhe der Schicht an Masse 34, die sich in Richtung des Pfeils 36 hinter dem Trichter befindet, bestimmt.

Ein Balken 32 ist nicht vorgesehen. Ein Kompaktieren bzw. Komprimieren durch den Balken 32, wie in der Ausführung nach Figur 3, ist damit nicht gegeben. Für das Kompaktieren ist nun ausschließlich die Platte 38 zuständig. Man erkennt in Figur 4, dass sie eine deutlich höhere Anfangsschräge bzw. -rundung an ihrer vorderen Kante hat als in der Ausführung nach Figur 3. Die Schicht aus der Masse 34 zwischen Trichter und Platte 38 ist mindestens 10, vorzugsweise mindestens 20% dicker als die Dicke der fertigen Lage 22. Sie ist maximal 40%, vorzugsweise maximal 30% dicker als die Dicke der fertigen Lage 22. Im Beispiel ist die Dicke der Schicht aus der Masse 34 zwischen Trichter und Platte 38 10 mm dick, die Lage 22 ist 8 mm dick.

Vorzugsweise wird die Platte 38 mehrfach hin- und her bewegt und vorzugsweise wird der Druck schrittweise erhöht auf einen Endwert.

### Rezeptur:

100 kg Körner aus Marmor im Körnungsband 3 bis 5 mm,
3,5 bis 4 kg an 2K PUR Kleber,
davon 3/5 aliphatisches Isocyanat und 2/5 Härter.
Die Topfzeit liegt bei ca. 30 min.

Im Allgemeinen werden 3,5 bis 4 Gew.-% (bezogen auf die Körner) an PUR Kleber eingesetzt.

Die Wärmedämmplatte für das Bauwesen ist zweischichtig aus einer Schaumstoffplatte 20, die einen geschlossenzelligen Hartschaum aufweist, und einer Lage 22 aufgebaut. Die Lage 22 besteht aus Körnern und einem Kunststoffkleber. Die Körner bestehen aus Stein oder aus Glas. Der Kunststoffkleber ist ein 2K-Kleber, er verbindet einerseits die Körner untereinander und andererseits die Körner mit einer Oberfläche 28 der Schaumstoffplatte 20. Die Lage 22 weist untereinander verbundene, offene Poren auf. Das Porenvolumen beträgt mindestens 20 Vol-%, insbesondere mindestens 30 Vol-%.

## Patentansprüche

1. Wärmedämmplatte für das Bauwesen mit einer Schaumstoffplatte (20), die einen geschlossenzelligen Schaum aufweist, und mit einer auf die Schaumstoffplatte (20) aufgebrachten Lage (22), die aus Körnern und einem Kunststoffkleber besteht, wobei die Körner (24) aus Stein oder aus Glas bestehen und der Kunststoffkleber einerseits die Körner untereinander und andererseits die Körner (24) mit einer Oberfläche (28) der Schaumstoffplatte (20) verbindet, wobei die Lage (22) untereinander verbundene, offene Poren mit einem Porenvolumen aufweist, das mindestens 20 Vol-%, insbesondere mindestens 30 Vol-% beträgt.

2. Wärmedämmplatte nach Anspruch 1, **dadurch gekennzeichnet, dass** die Körner (24) ein Körnungsband von 1 bis 7 mm, insbesondere 1 bis 3 oder 3 bis 5 mm aufweisen.

3. Wärmedämmplatte nach einem der vorangegangenen Ansprüche, **dadurch gekennzeichnet, dass** der Kunststoffkleber ein zweikomponentiger Polyurethankleber ist, und dass der Kunststoffkleber vorzugsweise Polyurethan und Härtemittel in einem Verhältnis zwischen 50 - 80 Gew-% Polyurethan und Rest Härtemittel aufweist.

4. Wärmedämmplatte nach einem der vorangegangenen Ansprüche, **dadurch gekennzeichnet, dass** sich zwischen der Lage (22) und der Schaumstoffplatte (20) eine dünne Beschichtung (50) aus einem Haftprimer befindet, insbesondere eine Beschichtung (50) auf der Basis eines Zweikomponenten-Polyurethans befindet.

5. Wärmedämmplatte nach einem der vorangegangenen Ansprüche, **dadurch gekennzeichnet, dass** die Lage (22) eine Schichtdicke von 2 bis 10 mm, insbesondere 4 bis 7 mm aufweist.

6. Wärmedämmplatte nach einem der vorangegangenen Ansprüche, **dadurch gekennzeichnet, dass** der Kunststoffkleber ein aliphatisches Isocyanat ist.

7. Verfahren zum Herstellen einer Wärmedämmplatte für das Bauwesen, die eine Schaumstoffplatte (20), welche einen geschlossenzelligen Hartschaum aufweist und eine Lage (22) aus Körnern (24) und Kunststoffkleber aufweist, **gekennzeichnet durch** die folgende Verfahrensschritte:
a) Bereitstellen der Schaumstoffplatte (20),
b) Mischen der Körner (24) mit einem zweikomponentigen Polyurethankleber, bis eine homogene Masse (34) erreicht ist,
c) Aufbringen der Masse (34) auf eine Oberfläche (28) der Schaumstoffplatte (20), anschließend an das Mischen und bevor der Aushärteprozess einsetzt, und
d) Egalisieren der Masse (34) auf der Schaumstoffplatte (20), Andrücken der Masse (34) gegen die Schaumstoffplatte (20) und Ausbilden einer Lage (22) mit einer gleichmäßigen Schichtdicke auf der Oberfläche der Schaumstoffplatte (20), und
e) Aushärtenlassen des Polyurethanklebers.

8. Verfahren nach Anspruch 7, **dadurch gekennzeichnet, dass** beim Aushärten des Kunststoffklebers gleichzeitig sowohl die Verbindung der Körner (24) untereinander als auch die Verbindung der Körner (24) mit der Oberfläche der Schaumstoffplatte (20) erreicht wird.

9. Verfahren nach Anspruch 7 oder 8, **dadurch gekennzeichnet, dass** vor dem Schritt c) die Oberfläche (28) der Schaumstoffplatte (20) mit einer Beschichtung (50) aus einem Haftprimer versehen wird.

10. Verfahren nach einem der Ansprüche 7 bis 9, **dadurch gekennzeichnet, dass** für den Schritt d) zumindest eine Platte (38) auf die Schicht aus der Masse (34) angedrückt und gegenüber dieser Schicht bewegt wird.
